# EUROPEAN PATENT APPLICATION

(11) **EP 3 653 586 A1**
(43) Date of publication of application: **20.05.2020**
(21) Application number: 18206702.5
(22) Date of filing: 16.11.2018
(51) Int. Cl.: C02F 1/48, C02F 1/00, B01F 5/06, B01F 13/00

(54) **A WATER TREATMENT DEVICE**

(71) Applicant: JL Ventures, SIA, 2111 Katlakalns Kekavas pag. (LV)
(72) Inventor: MAYER, Jakob Wilhelm, LV-2111 Katlakalns (LV)
(74) Representative: Kromanis, Artis

(57) **Abstract**

Invention relates to a water piping, especially to water treatment devices. A water treatment device comprising two oppositely wound double-helix water pipes (1; 2; 5; 6), permanent magnet units (A, N, S) and a container (10) enclosing the two oppositely wound double-helix water pipes (1; 2; 5; 6), wherein a space between the double-helix water pipes (1; 2; 5; 6) and an inner surface of the container (10) is filed with minerals (11). The device comprising aforementioned technical features, especially two oppositely wound double-helix water pipes with said magnet units generate water flow with increased turbulence.

## Description

Invention relates to a water piping, especially to water treatment devices.

European patent publication No. EP 1 076 037 discloses a portable water flow through device comprising a housing with an inlet and an outlet, and a configuration of copper pipes joining them wherein the copper pipe configuration is surrounded by two plastic foils with ground, axially oriented magma powder between them; between the outer plastic foil and the plastic housing there are several alternative layer of copper foil and cotton wool, and a layer of axially oriented, piezoelectrically arranged quartz crystals; and the inner space between the copper pipes is filled with axially oriented quartz crystals. Similar device is disclosed in German utility model registration publication No. DE 20 2008 002 098 U1.

The present invention is a water treatment device comprising water pipes bent into two oppositely wound double-helix strands or pipes with optional number of winding. One pipe or strand is wound left-hand or clockwise direction and another pipe or strand is wound righthand or counter clockwise direction. The number of windings is predetermined by use of a water treatment device.

The water treatment device comprises a first part of two oppositely wound double-helix water pipes and a second part of two oppositely wound double-helix water pipes.

Each pipe of the first part of two oppositely wound double-helix water pipes has an inlet and an outlet.

The device further comprises a connector having two adjacent arranged channels. Both channels are bent by approximately 180 degrees and inlets of both channels are fluidly connected to the respective outlets of the first part of two oppositely wound double-helix water pipes.

Each pipe of the second part of two oppositely wound double-helix water pipes has an inlet and an outlet similar to the first part of two oppositely wound double-helix water pipes. The inlets of the second part of two oppositely wound double-helix water pipes are fluidly connected to respective outlets of both channels in result of which a water can flow through one double-helix water pipe of the first part to another double-helix water pipe of the second part. The water flow through the water pipes following a principle of flow and counter flow within each of two double helixes.

The device comprises an attracting magnet unit arranged on the pipe and comprising two permanent magnets fixed on either side of the pipe and attracting one another. The device comprises a north pole repelling magnet unit arranged on the pipe and comprising two permanent magnets fixed on either side of the pipe that repel one another with their north poles facing one another. The device comprises a south pole repelling magnet unit arranged on the pipe and comprising two permanent magnets fixed on either side of the pipe that repel one another with their south poles facing one another. The following arrangement of the magnets further increases turbulence of water flowing through the oppositely wound double-helix water pipes. The permanent magnet patterns adds a much increased quality of magnetically created turbulences in the water pipe by creating alternating magnetic fields with different and opposite magnetic qualities such as magnetic pressure created through the following: repelling magnetic forces of two north poles facing one another; repelling magnetic forces of two south poles facing one another; and attracting magnetic forces of north and south pole facing one another. Size and strength of magnets as well as the pattern set up can be altered according to specific needs requested and according to the size of the device.

The water pipes may be further treated with further layers like a gold coating, silver coating. The water pipes may be sequentially squeezed. In another embodiment, the water pipes may be equipped with magnets creating various polarization patterns. In another embodiment, crystals may be attached to the water pipe.

The device further comprises connectors fluidly connected to both inlets of the first part of two oppositely wound double-helix water pipes and to both outlets of the second part of two oppositely wound double-helix water pipes. The connectors are configured to be connectable to existing standard connectors of pipping.

The device comprising aforementioned technical features, especially two oppositely wound double-helix water pipes with said magnet units generate water flow with increased turbulence. The device further comprises a container enclosing the first and the second part of two oppositely wound double-helix water pipes as well as the connector. A space between the double-helix water pipes and an inner surface of the container may be filed with minerals. The container itself may be transparent or non-transparent.

The minerals may be selected from the group of following minerals: a lava, a crystal quartz sand, an amethyst, a clear mountain crystal, a gold, a mineral powder and combination thereof. The minerals are arranged in the container in layered manner and are layered according to the golden ratio. The layers of the minerals may be arranged so that the layer of a larger quantity of the minerals is arranged closer to the connectors of the water treatment device than the layer of a smaller quantity of the minerals. The layer of the smallest quantity of the minerals is arranged at the connector, respectively.

The layering order as well as the mix of integrated mineral matter however are free to be switched and altered according to the need of the respective demand on the quality of the water at any given time. This also includes any mineral and crystal matter, which is not explicitly mentioned or described here.
Fig. **1** illustrates a water device with two oppositely wound double-helix pipes **1; 2; 5** and **6.** For the sake of clarity, the illustration is divided in three parts.
Fig. **2** illustrates a water device where two oppositely wound double-helix pipes are installed into a container **10** and the container is filled with various minerals **11.**
Fig. **3** illustrates a permanent magnet pattern positioned on piper **1; 2; 5** and **6.** The Fig. **3** illustrates the same water device with two oppositely wound double-helix pipes as illustrated in Fig. **1****,** for sake of clarity the pipes are displayed as non-wound pipes.

### Detailed description of the invention

Before explaining the disclosed embodiment of the present invention in detail, it is to be understood that the invention is not limited in its application to the details of the particular arrangements shown, since the invention is capable of other embodiments. In addition, the terminology used herein is for the purpose of description and not of limitation.

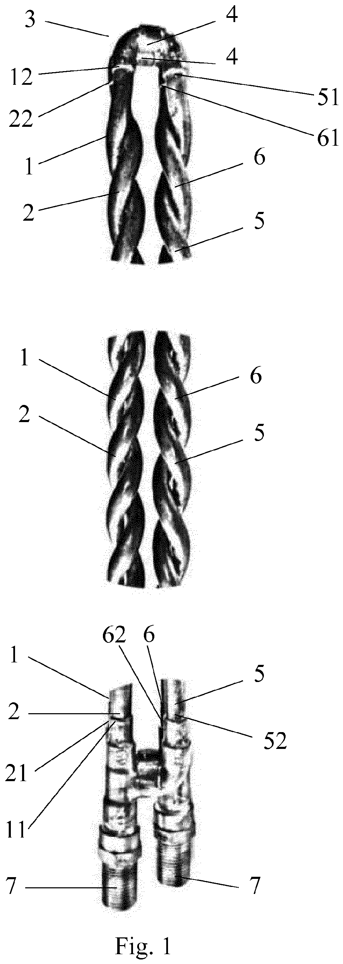

A water treatment device as illustrated in Fig. **1** comprising a first part of two oppositely wound double-helix water pipes **1** and **2** and a second part of two oppositely wound double-helix water pipes **5** and **6.** Each of two oppositely wound double-helix water pipes **1** and **2** has an inlet **11** and **21** and an outlet **12** and **22.** The device comprises a connector **3** having two adjacent arranged channels **4,** wherein both channels **4** are bent by approximately 180 degrees and inlets of both channels **4** are fluidly connected to the respective outlets **12** and **22** of the first part of two oppositely wound double-helix water pipes **1** and **2.** Each of two oppositely wound double-helix water pipes **5** and **6** has an inlet **51** and **61** and an outlet **52** and **62.** The inlets **51** and **61** of the second part of two oppositely wound double-helix water pipes **5** and **6** are fluidly connected to respective outlets of both channels **4,** in result of which a water can flow through one double-helix water pipe **1** and **5** and another double-helix water pipe **2** and **6.** The device comprises connectors **7** fluidly connected to both inlets **11** and **21** of the first part of two oppositely wound double-helix water pipes **1** and **2** and to both outlets **52** and **56** of the second part of two oppositely wound double-helix water pipes **5** and **6.**

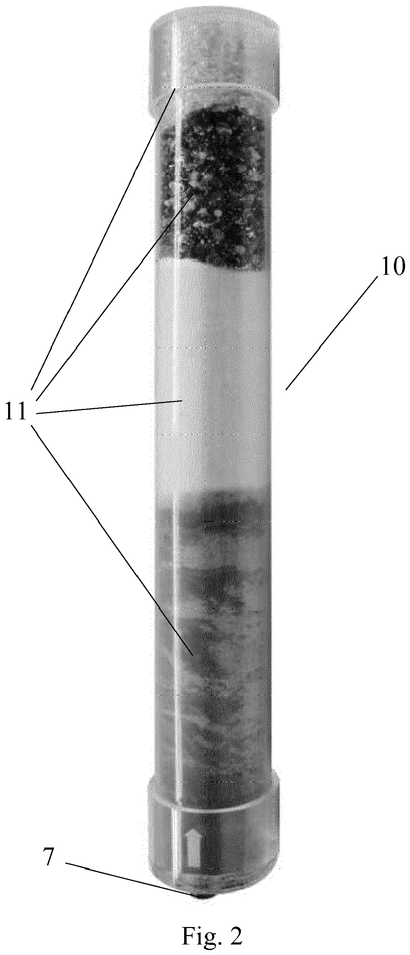

A water treatment device as illustrated in Fig. **2** further comprises container **10** enclosing the first and the second part of two oppositely wound double-helix water pipes **1, 2, 5,** and **6** (see Fig. **1**) as well as the connector **3** (see Fig. **1**). A space between the double-helix water pipes **1, 2, 5** and **6** and an inner surface of the container **10** is filed with minerals **11.** The minerals **11** are selected from the group of following minerals **11:** a lava, a crystal quartz sand, an amethyst, a clear mountain crystal, a gold and a mineral powder. The minerals **11** are arranged in the container **10** in layered manner and are layered according to the golden ratio. The layers of the minerals **11** are arranged so that the layer of a larger quantity of the minerals **11** is arranged closer to the connectors **7** of the water treatment device than the layer of a smaller quantity of the minerals **11.** The layer of the smallest quantity of the minerals **11** is arranged at the connector **3.**

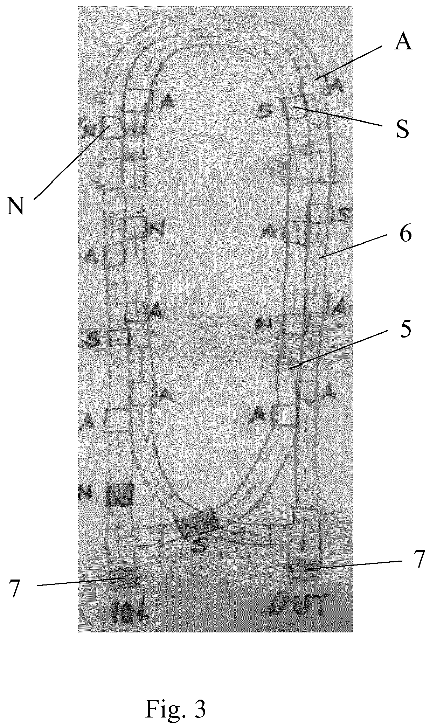

The device further comprises permanent magnet units as illustrated in Fig. **3****.** The water pipes in Fig. 3 is kept straight instead of twisted for the reason of better understanding. Of course this pattern is placed on the two oppositely twisted copper pipes as described above. At least one attracting magnet unit **A** is arranged on the pipe **1, 2, 5** and **6** and comprising two permanent magnets fixed on either side of the pipe **1, 2, 5** and **6** and attracting one another. At least one north pole repelling magnet unit **N** arranged on the pipe **1, 2, 5** and **6** and comprising two permanent magnets fixed on either side of the pipe **1, 2, 5** and **6** that repel one another with their north poles facing one another. At least one south pole repelling magnet unit S arranged on the pipe **1, 2, 5** and **6** and comprising two permanent magnets fixed on either side of the pipe **1, 2, 5** and **6** that repel one another with their south poles facing one another. The following arrangement creating different qualities of magnetic turbulences and integrating a balance of the magnetic qualities in the water.

The invention has been described with reference to various specific and illustrative embodiments and techniques. However, one skilled in the art will recognize that many variations and modifications may be made while remaining within the scope of the invention as defined in the appended claims.

## Claims

1. A water treatment device comprising:
a first part of two oppositely wound double-helix water pipes (1; 2), wherein each pipe (1; 2) has an inlet (11, 21) and an outlet (12, 22);
a connector (3) having two adjacent arranged channels (4), wherein both channels (4) are bent by approximately 180 degrees and inlets of both channels (4) are fluidly connected to the respective outlets (12, 22) of the first part of two oppositely wound double-helix water pipes (1; 2);
a second part of two oppositely wound double-helix water pipes (5; 6), wherein
each pipe (5; 6) has an inlet (51, 61) and an outlet (52, 62), and the inlets (51, 61) of the second part of two oppositely wound double-helix water pipes (5; 6) are fluidly connected to respective outlets of both channels (4) in result of which a water can flow through one double-helix water pipe (1; 5) and another double-helix water pipe (2; 6);
an attracting magnet unit (A) arranged on the pipe (1; 2; 5; 6) and comprising two permanent magnets fixed on either side of the pipe (1; 2; 5; 6) and attracting one another;
a north pole repelling magnet unit (N) arranged on the pipe (1; 2; 5; 6) and
comprising two permanent magnets fixed on either side of the pipe (1; 2; 5; 6) that repel one another with their north poles facing one another;
a south pole repelling magnet unit (S) arranged on the pipe (1; 2; 5; 6) and
comprising two permanent magnets fixed on either side of the pipe (1; 2; 5; 6) that repel one another with their south poles facing one another;
connectors (7) fluidly connected to both inlets (11, 21) of the first part of two oppositely wound double-helix water pipes (1; 2) and to both outlets (52, 56) of the second part of two oppositely wound double-helix water pipes (5; 6); and
a container (10) enclosing the first and the second part of two oppositely wound double-helix water pipes (1; 2; 5; 6) as well as the connector (3);
wherein a space between the double-helix water pipes (1; 2; 5; 6) and an inner surface of the container (10) is filed with minerals (11).

2. The water treatment device according to Claim 1, wherein two oppositely wound double-helix water pipes (1; 2; 5; 6) touch each other.

3. The water treatment device according to Claim 1 or 2, wherein the minerals (11) are selected from the group of following minerals (11): a lava, a crystal quartz sand, an amethyst, a clear mountain crystal, a gold, a mineral powder and combination thereof.

4. The water treatment device according to Claim 1, 2 or 3, wherein the minerals (11) are arranged in the container (10) in layered manner and are layered according to the golden ratio.

5. The water treatment device according to Claim 4, wherein the layers of the minerals (11) are arranged so that the layer of a larger quantity of the minerals (11) is arranged closer to the connectors (7) of the water treatment device than the layer of a smaller quantity of the minerals (11).

6. The water treatment device according to Claim 4 or 5, wherein the layer of the smallest quantity of the minerals (11) is arranged at the connector (3).
